# FASCICULE DE BREVET EUROPEEN

(11) **EP 1 050 397 B1**
(45) Date de publication et mention de la délivrance du brevet: **30.06.2004**
(21) Numéro de dépôt: 00108302.1
(22) Date de dépôt: 14.04.2000
(51) Int. Cl.: B29D 30/06, B29C 33/48

(54) **Elément moulant et moule pour le moulage d'une découpure dans une bande de roulement**
Formgebendes Element und Formwerkzeug zum Formen eines Ausschnittes in einer Reifenlauffläche
Moulding element and mould for moulding a cutout in a tyre tread

(30) Priorité: 06.05.1999 FR 9905820
(43) Date de publication de la demande: 08.11.2000
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: Merino-Lopez, José, 63200 Riom (FR); Lavialle, Georges, 63160 Billom (FR); Auxerre, Pascal, 63130 Royat (FR); Falempin, Pascal, 63500 Issoire (FR)
(74) Mandataire: Diernaz, Christian

(56) Documents cités:
- EP-A- 0 873 851
- EP-A- 0 925 907
- FR-A- 1 406 950
- US-A- 3 642 416
- PATENT ABSTRACTS OF JAPAN vol. 013, no. 202 (M-824), 12 mai 1989 (1989-05-12) -& JP 01 024709 A (NIPPON PLAST CO LTD), 26 janvier 1989 (1989-01-26)
- PATENT ABSTRACTS OF JAPAN vol. 1999, no. 04, 30 avril 1999 (1999-04-30) & JP 11 000924 A (MATSUSHITA ELECTRIC IND CO LTD), 6 janvier 1999 (1999-01-06)

## Description

L'invention concerne un élément moulant destiné à mouler une découpure dans une bande de roulement d'un pneumatique, ainsi qu'un moule équipé avec au moins un tel élément moulant.

Le brevet **FR 2 759 323** de la demanderesse décrit une nouvelle sculpture d'une bande de roulement pour pneumatique particulièrement intéressante en ce qui concerne la performance bruit de roulage et usure. Dans cette demande, il a été proposé une sculpture de bande de roulement comportant une pluralité de découpures dont les parois sont reliées par au moins un pont de liaison; il a également été proposé une méthode de réalisation selon laquelle on introduit, dans une bande de roulement avant moulage et vulcanisation, un intercalaire, par exemple en papier, pourvu d'au moins un orifice laissant passer le mélange de caoutchouc pendant le moulage pour réaliser un pont de liaison.

Dans un autre brevet **FR 2 759 321**, la demanderesse a proposé un autre procédé de réalisation d'une telle sculpture mettant en oeuvre un moule comportant une partie supérieure et une partie inférieure, chacune desdites parties étant pourvues d'éléments moulants coopérant ensemble pour mouler des découpures pourvues de ponts de liaison. Cette méthode, bien que très intéressante, nécessite cependant de fabriquer dans un premier temps une bande de roulement puis dans un second temps d'assembler ladite bande sur une ébauche de pneumatique dépourvue de bande de roulement.

Un objectif de la présente invention est de réaliser une bande de roulement comportant au moins une découpure pourvue d'au moins un pont de liaison en réalisant le moulage de la bande directement pendant le moulage et la vulcanisation d'un pneumatique pourvu de cette bande sans avoir à introduire un matériau intercalaire dans une bande de roulement.

Pour répondre à cet objectif, il est proposé un élément moulant destiné à équiper un moule pour mouler une découpure dans une bande de roulement en mélange de caoutchouc, ladite découpure ayant ses parois principales reliées par au moins un pont de liaison en mélange de caoutchouc. Chaque pièce de moule présente une face de moulage pour mouler la surface de roulement de ladite bande et peut être animée d'un mouvement dans une direction de moulage/démoulage.

L'élément moulant selon l'invention comporte une partie d'ancrage destinée à être fixée à une pièce de moule et prolongée par une partie moulante destinée à faire saillie sur la face de moulage de ladite pièce. La partie moulante de l'élément moulant selon l'invention comporte au moins deux extensions formant des prolongements et dont les faces sont destinées au moulage des parois délimitant la découpure, l'une au moins de ces extensions comprenant au moins un bras monté pivotant autour d'un axe de pivot de façon à être, dans la position de moulage, en appui sur au moins une autre extension du même élément moulant pour délimiter au moins un orifice traversant l'élément moulant et destiné au moulage d'un pont de liaison.

Cet élément moulant est caractérisé en ce que, l'axe de pivot de chaque bras monté pivotant traverse ledit bras et l'extension portant ledit bras et est en outre perpendiculaire à la direction de démoulage de l'élément moulant de façon à ce que chaque bras pivote au cours du démoulage sous l'action des efforts exercés par le caoutchouc.

Par découpure, on entend, dans les domaines des pneumatiques pour véhicules de tourisme ou de poids lourd, soit une rainure, caractérisée par une largeur au moins égale à 3 mm soit une incision, caractérisée par une largeur inférieure à 3 mm.

Dans la configuration de moulage, un bras mobile en rotation est dit en appui sur une autre extension du même élément moulant quand une partie d'une de ses faces de paroi est en contact avec ladite autre extension. Dans le cadre de l'invention, il peut être envisagé qu'un bras mobile monté sur une extension soit en contact avec un bras mobile d'une autre extension du même élément moulant.

Au début de l'opération de démoulage, après moulage et vulcanisation d'une bande de roulement avec un moule équipé avec un élément moulant selon l'invention, chaque bras mobile en rotation est soumis aux efforts exercés par les ponts de liaison moulés dans les orifices et va alors tourner pour permettre l'extraction de l'élément moulant hors de la bande sans rupture des ponts de liaison moulés. Bien entendu, ce démoulage n'est possible que compte tenu des propriétés mécaniques des mélanges de caoutchouc (en particulier, possibilité de grandes déformations sans qu'il y ait de rupture desdits mélanges).

De manière avantageuse, il peut être prévu des moyens de rappel élastiques pour contraindre chaque bras mobile en rotation à reprendre la place qu'il occupe dans la position de moulage de façon à assurer une bonne géométrie de moulage. Dans le même but, on peut prévoir, seuls ou en combinaison avec la disposition précédente, des moyens de retenue desdits bras mobiles dans la position de moulage, ces moyens étant efficaces jusqu'à un niveau d'effort préalablement déterminé (et bien sûr inférieur aux efforts exercés par le mélange pendant le démoulage pour permettre le démoulage).

L'invention concerne également une pièce d'un moule d'une bande de roulement pour pneumatique. Cette pièce est pourvue d'une face de moulage pour mouler la surface de roulement de la bande et peut être déplacée suivant une direction de moulage /démoulage. Cette pièce de moule comporte au moins deux éléments de relief faisant saillie sur la face de moulage de ladite pièce, l'un au moins desdits éléments de relief comprenant un support portant au moins un bras monté pivotant autour d'un axe de pivot fixé audit support, de façon à être, dans la configuration de moulage, en appui sur un autre élément de relief pour former au moins un orifice destiné au passage de mélange de caoutchouc pendant le moulage d'une bande de roulement.

Cette pièce de moule est caractérisée en ce que, l'axe de pivot de chaque bras monté pivotant traverse ledit bras et est fixé à l'élément de relief portant ledit bras et est en outre perpendiculaire à la direction de moulage/démoulage de ladite pièce de moule de façon à ce que chaque bras pivote au cours du démoulage sous l'action des efforts exercés par le caoutchouc.

Par appui d'un bras pivotant sur un élément de relief, on entend que ce bras présente, dans la configuration de moulage, une face en contact au moins en partie avec au moins une face dudit élément de relief.

La pièce de moule selon l'invention permet, en particulier, de mouler, dans une bande de roulement, une découpure dont les parois principales sont reliées par un ou plusieurs pont(s) de liaison, au moins un desdits ponts étant entièrement situé sous la surface de roulement de la bande de roulement moulée (pour cela, au moins un bras mobile est à une distance strictement supérieure à zéro de la face de moulage de la pièce de moule).

Après moulage et vulcanisation d'une bande de roulement et au moment du démoulage (c'est-à-dire extraction des éléments de relief hors de la bande), les bras, montés pivotants dans un plan contenant la direction de moulage/démoulage, vont pivoter sous l'action des efforts exercés par le mélange de caoutchouc traversant les orifices de l'élément de relief. Les bras mobiles ayant pivoté, il est alors possible de dégager les éléments de relief hors de la bande sans avoir de rupture des ponts.

De manière préférentielle, il peut être prévu des moyens de rappel élastiques pour contraindre les bras pivotant à reprendre la place qu'ils occupent dans la position de moulage. En outre, il peut être adjoint des moyens de retenue desdits bras mobiles dans la position de moulage, ces moyens étant efficaces jusqu'à un niveau d'effort préalablement déterminé (et bien sûr inférieur aux efforts exercés par le mélange pendant le démoulage).

L'invention qui vient d'être exposée sera mieux comprise à l'aide de la description qui va suivre en regard du dessin présentant plusieurs variantes selon l'invention présentées à titre non limitatif et selon lequel :
- la figure **1** montre une première variante d'un élément moulant selon l'invention dans la configuration de moulage;
- la figure **2** montre l'élément moulant de la figure 1 dans la position après démoulage;
- la figure **3** montre une autre variante d'élément moulant selon l'invention présentant deux orifices pour mouler deux ponts de liaison;
- la figure **4** montre une autre variante d'élément moulant selon l'invention présentant deux orifices dans la position de moulage;
- la figure **5** montre, en coupe, une autre variante d'élément moulant selon l'invention monté sur une pièce de moule dans la configuration de moulage;
- la figure **6** montre l'élément moulant de la figure 5 en fin de démoulage;
- la figure **7** montre une coupe d'une autre pièce de moule selon l'invention.

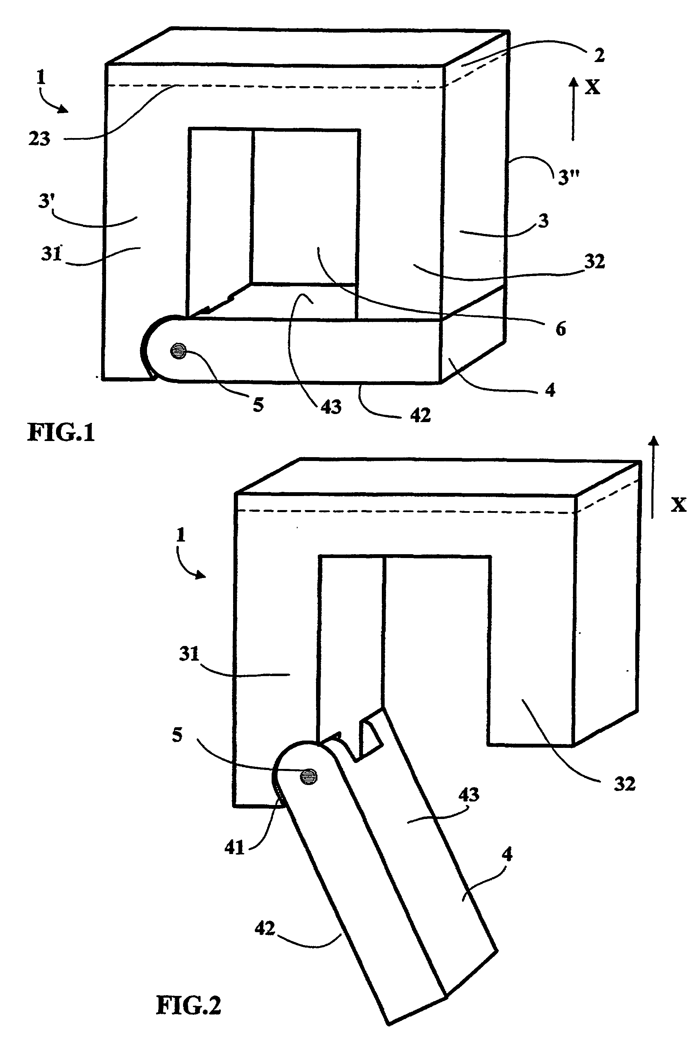

Sur la figure **1**, on voit un élément moulant 1 représenté dans la configuration de moulage pour mouler une incision ayant un pont de liaison reliant les parois principales de ladite incision. Cet élément moulant 1 a sensiblement la forme d'une lame comportant un orifice 6 pour le moulage d'une incision comportant un pont de liaison moulé dans ledit orifice **6**. Cet élément moulant **1** est formé d'une partie d'ancrage **2,** destinée à être fixée à une pièce de moule, et prolongée par une partie moulante **3** destinée à faire saillie sur la face de moulage de ladite pièce (la limite entre la partie d'ancrage et la partie moulante est figurée de façon schématique par la ligne en pointillés repérée **23**). La partie moulante **3** présente deux faces principales de moulage **3'** et **3"** (seule la face avant **3'** est visible sur cette figure), lesdites faces étant sensiblement parallèles et espacées d'une distance faible comparativement aux autres dimensions de ladite partie moulante. Cette partie moulante **3** comprend deux extensions **31** et **32** de formes rectangulaires et de longueurs inégales.

En outre, un bras pivotant **4**, de même épaisseur que l'épaisseur des extensions **31** et **32** et comportant une face intérieure **43** de moulage et une face extérieure 42 de moulage, est monté libre en rotation autour d'un axe de pivot **5** traversant perpendiculairement l'extension **31** d'une face **3'** à l'autre face **3".** Dans la configuration de moulage représentée sur la figure **1**, la partie d'extrémité de la face intérieure **43** de ce bras pivotant est en contact avec la paroi d'extrémité de l'autre extension **32**.

Pendant la phase de démoulage, l'élément moulant 1 est entraîné par la pièce de moule sur laquelle il est monté, dans une direction repérée par la flèche **X** sur la figure **1**. Durant cette phase, le pont de liaison moulé dans l'orifice **6** s'oppose à l'extraction de l'élément moulant hors de la bande moulée et exerce un effort sur le bras qui, compte tenu de son montage en rotation, va tourner autour de l'axe de pivot **5** créant ainsi un passage pour le dégagement du pont. La figure **2** montre ce même élément moulant **1** dans la phase finale du démoulage, le bras pivotant étant en position ouverte pour permettre l'extraction de l'élément moulant hors de la bande de roulement moulée.

De façon avantageuse, il est prévu des moyens sur l'extension **31** portant le bras pivotant **4** pour limiter la rotation maximale du bras **4** de façon que le passage créé pour le démoulage présente des dimensions suffisantes afin qu'il n'y ait pas rupture du pont de liaison tout en permettant que, sous les efforts exercés par le mélange de caoutchouc d'une nouvelle bande à mouler, le bras pivotant reprenne la position de moulage en contact avec l'extension **32.** Ces moyens consistent dans le cas présent en une portée oblique **41** par rapport à la direction **X** contre laquelle vient buter la face extérieure **42** du bras mobile **4**.

Pour améliorer encore le retour dans la position de moulage, il peut être prévu d'associer à l'élément moulant selon l'invention des moyens de rappel élastique, comme par exemple un ressort fixé sur ou dans l'extension **31** et agissant sur le bras pivotant pour le contraindre à revenir en contact avec l'autre extension **32** après démoulage.

Une autre variante intéressante consiste à pourvoir le bras 4 d'un prolongement s'étendant au-delà de l'extension **32** dans la configuration de moulage, de façon à ce que l'effet de levier soit augmenté pour faciliter le mouvement de rotation dudit bras pendant l'opération de pénétration dans le mélange de caoutchouc non vulcanisé au moment de la fermeture du moule équipé avec l'élément moulant selon l'invention.

En outre et de façon à être sûr que le bras pivotant est et reste dans la bonne position de moulage avant tout nouveau moulage d'une bande, il est avantageux de prévoir des moyens de retenue dudit bras dans la position de moulage, ces moyens étant efficaces jusqu'à un niveau d'effort préalablement déterminé (et bien sûr inférieur au niveau des efforts exercés par le mélange pendant le démoulage).

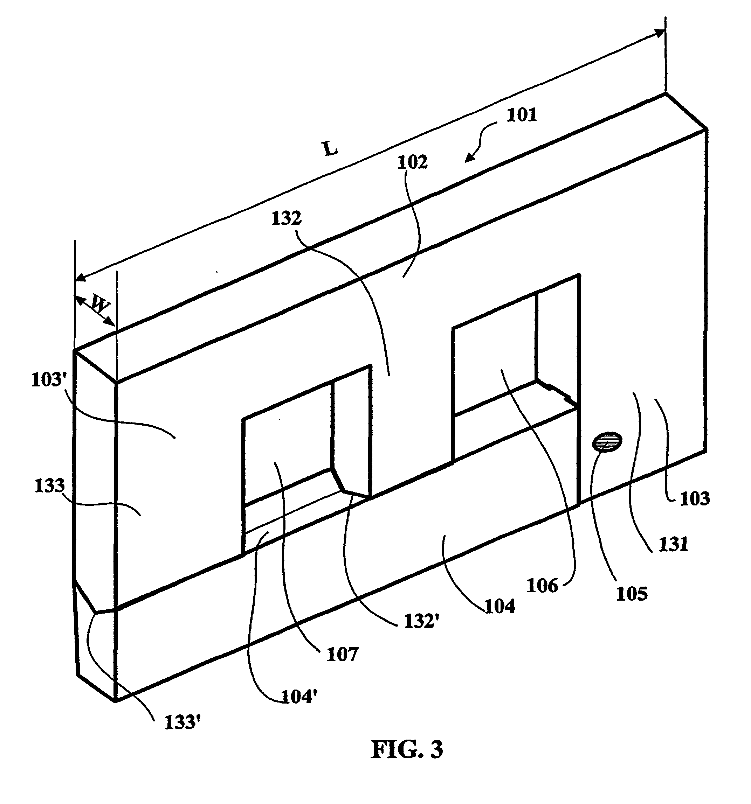

L'élément moulant **101** représenté à la figure 3 est prévu pour mouler une découpure d'épaisseur **W** dont les parois principales sont planes et reliées mécaniquement par deux ponts de liaison moulés dans les orifices repérés **106** et **107.** Dans la vue perspective montrée sur cette figure **3**, seule est visible la face avant **103'** moulant l'une des parois principales d'une découpure. À l'image de la variante représentée sur la figure **1**, l'élément moulant **101** comprend une partie d'ancrage **102** destinée à être fixée dans un moule; prolongée par une partie moulante **103** comportant trois extensions **131, 132, 133.** Une extension **131** est pourvue d'un bras **104** monté tournant autour d'un axe de pivot **105** par rapport à cette extension **131** de façon à pouvoir venir en contact avec les extrémités **132', 133'** des extensions **132** et **133** pour constituer l'élément moulant dans la configuration de moulage. Il est prévu que les extrémités **132'** et **133'** ont des formes biseautées pour venir se positionner à l'intérieur de rainures en **V** prévues sur la face intérieure **104'** du bras **104** destinée à être en contact avec les extensions **132, 133;** cette disposition présente l'avantage d'assurer un bon positionnement du bras pivotant par rapport auxdites extensions.

Dans cette configuration représentée correspondant à la configuration de moulage, les extensions et le bras monté pivotant délimitent deux orifices **106** et **107** traversant l'élément moulant dans son épaisseur.

Dans le cas d'un élément moulant de grande longueur **L**, il peut être difficile de démouler, c'est-à-dire d'extraire l'élément moulant d'une bande après moulage, sans occasionner de grandes déformations du mélange de caoutchouc entourant l'élément moulant. Ces grandes déformations peuvent avoir pour conséquence des ruptures ou arrachement du mélange. Pour faciliter le démoulage dans ce cas, il est avantageux de réaliser le bras pivotant **104** en deux parties, lesdites parties, dans le prolongement l'une de l'autre, étant montées mobiles l'une par rapport à l'autre, par exemple au niveau de l'extension intermédiaire **132,** l'un des deux bras étant toujours monté pivotant sur un axe de pivot fixé à une extension.

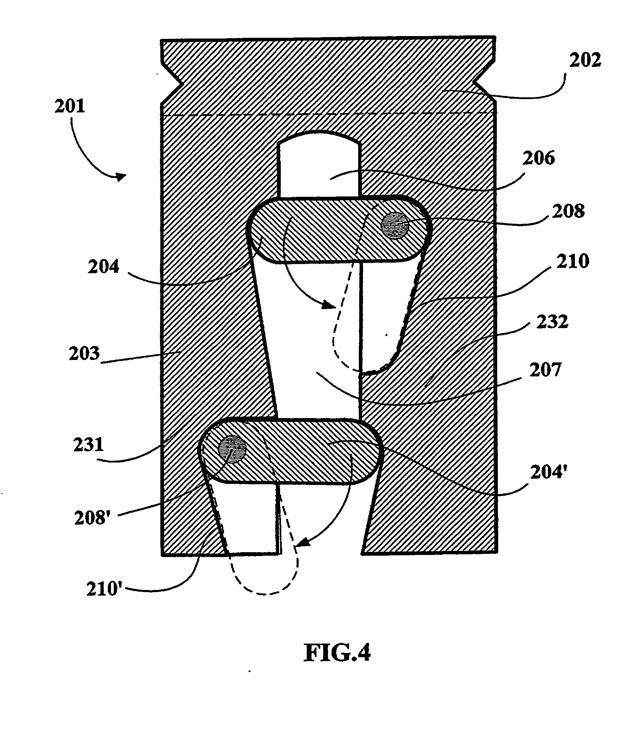

La figure **4** montre un autre élément moulant **201**, vu en coupe selon un plan perpendiculaire à la direction de son épaisseur, pour mouler une incision dans une bande de roulement d'un pneumatique, cette incision étant pourvue de deux ponts de liaison disposés l'un au-dessus de l'autre dans la direction du moulage/démoulage dudit élément moulant. Cet élément moulant **201** est réalisé dans une plaque plane métallique de faible épaisseur comportant une partie d'ancrage **202** prolongée par une partie moulante **203** ayant deux extensions **231, 232** de même longueur. Chaque extension comporte un bras **204, 204'** monté mobile en rotation autour d'un axe de pivot **208, 208'** traversant l'élément moulant **201** selon son épaisseur. Dans la configuration de moulage montrée, chaque bras **204, 204'** est en appui sur l'autre extension de façon à délimiter deux orifices **206** et **207** destinés à laisser passer le mélange de caoutchouc pendant le moulage pour mouler deux ponts de liaison reliant les parois principales opposées de l'incision moulée avec ledit élément moulant Le montage des bras **204 et 204'** sur les extensions **231, 232** est réalisé de manière que, en fin de démoulage, lesdits bras viennent en appui sur des portées **210, 210'** inclinées par rapport à la direction de moulage/démoulage pour limiter le mouvement de rotation d'ouverture et faciliter ainsi la remise en place desdits bras dans la configuration de moulage au moment de la pénétration de l'élément moulant dans le mélange non vulcanisé.

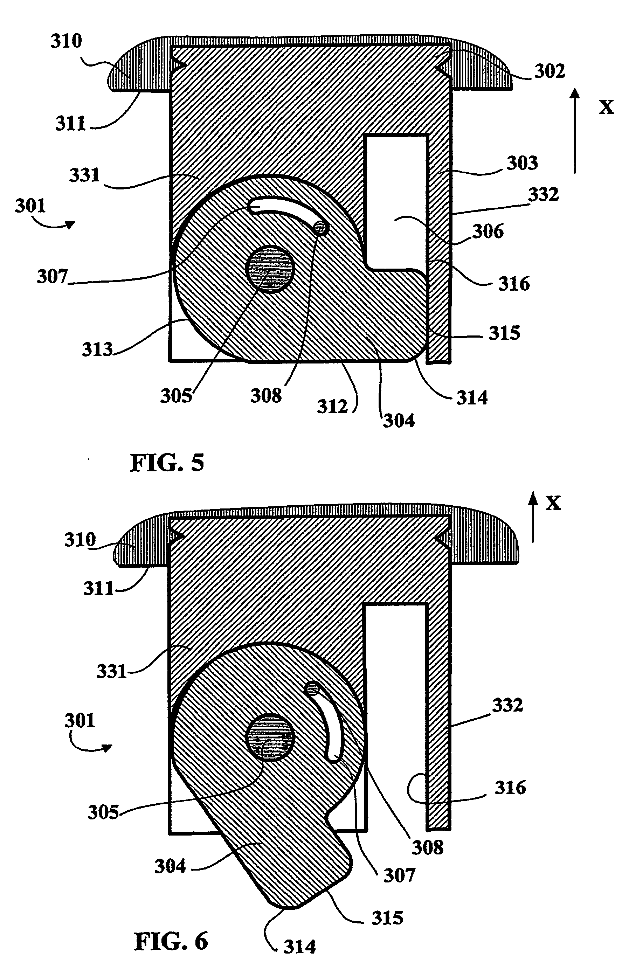

La figure **5** montre, vue en coupe, une autre variante d'élément moulant **301** selon l'invention montée sur un moule **310** de façon à ce que la partie d'ancrage **302** soit liée audit moule et que la partie moulante **303** dudit élément fasse saillie sur la surface de moulage **311** dudit moule. La partie moulante **303** comporte deux extensions **331** et **332** pour mouler une découpure dont les parois sont reliées par un pont de liaison moulé dans l'orifice **306.**

L'extension **331** est pourvue d'un bras **304** monté libre en rotation autour d'un axe de pivot **305** perpendiculaire à la direction de démoulage/moulage de l'élément moulant (cette direction est repérée par la flèche **X** et s'étend dans le présent exemple dans une direction perpendiculaire à la surface de moulage **311.** Dans la configuration de moulage représentée, le bras **304** porté par l'extension **331** présente une paroi d'extrémité **315** qui est partiellement en contact avec une paroi latérale **316** de l'autre extension **332** de manière à délimiter l'orifice **306** destiné au moulage du pont de liaison reliant les parois opposées de la découpure moulée par l'élément moulant **301.**

En outre, le bras pivotant **304** présente une géométrie adaptée pour faciliter le démoulage. Pour cela, et vu dans le plan de coupe représenté, le profil rectiligne **312,** du bras **304,** le plus éloigné de ladite surface de moulage **311** est prolongé de part et d'autre par des profils courbes **313** et **314** appropriés afin que, pendant le démoulage, la rotation dudit bras ne soit pas empêchée par le mélange environnant, en réduisant le plus possible les efforts exercés par ledit bras contre le mélange formant la bande de roulement moulée.

Sur la figure **6**, montrant le même élément moulant **301** en fin de démoulage, on constate que sous l'action du pont de liaison moulé dans l'orifice **306** le bras pivotant a tourné autour de l'axe **305** pour permettre alors l'extraction complète dudit élément moulant sans rupture dudit pont de liaison.

Des moyens, comprenant une lumière **307** réalisée sur la partie du bras pivotant **304** montée sur l'extension **331** et un axe **308** fixé dans ladite extension **331,** sont prévus pour limiter le mouvement de rotation au cours de l'extraction de l'élément moulant **301** de façon ensuite à faciliter la fermeture de l'élément moulant sous l'action du mélange pendant l'introduction dudit élément moulant dans une nouvelle bande à mouler (pour retrouver la configuration de moulage de la figure **5**).

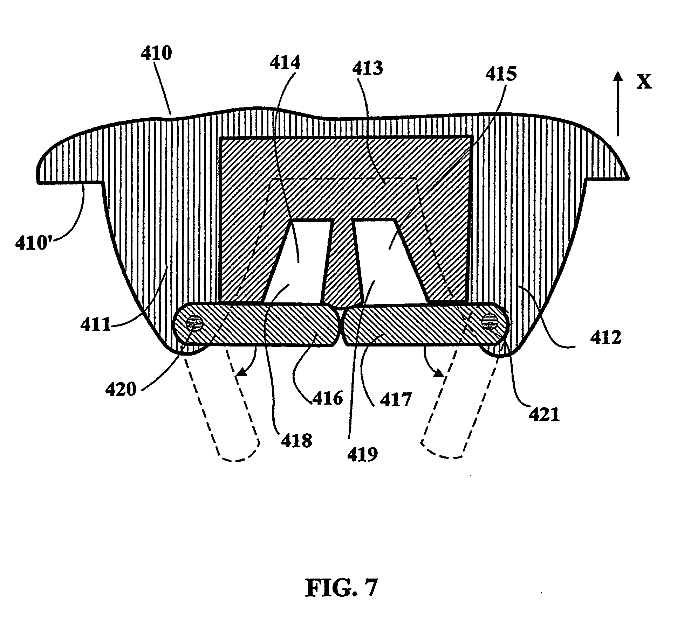

La figure **7** montre une coupe d'une pièce de moule **410** présentant une surface de moulage **410'** et pourvue de deux nervures **411** et **412** formant deux éléments de relief s'étendant sensiblement dans une même direction pour le moulage de deux rainures dans une bande de roulement. Sur cette même pièce de moule, une lame mince **413** constituant un troisième élément de relief est ancrée à la fois dans la pièce de moule et dans les nervures **411, 412** à ses deux extrémités latérales; cette lame **413** s'étend dans une direction transversale par rapport à la direction des nervures **411, 412.** Cette lame **413** est fixée à la pièce de moule et aux nervures, dans l'exemple présenté, au moment de la réalisation de ladite pièce par coulée.

Cette lame **413** présente deux faces principales planes (seule la face avant est visible sur la figure **7**) pour mouler les parois principales d'une incision, lesdites faces étant limitées par une face d'extrémité dont la géométrie, vue en coupe sur la figure **7**, délimite deux encoches **414** et **415** pour laisser passer le mélange pendant le moulage d'une bande de roulement.

Sur chaque nervure **411, 412,** un bras ayant la forme d'une lame **416, 417** est monté pivotant autour d'un axe de pivot **420, 421,** lesdites lames ayant dans l'exemple décrit, la même épaisseur que la lame **413** ancrée dans la pièce de moule **410.** Chaque lame pivotante **416, 417** est montée à l'intérieur d'un logement approprié prévu sur chacune des nervures. Ces deux lames pivotantes **416, 417** solidaires des nervures **411, 412,** représentées en traits pleins dans la configuration de moulage, ont leurs parois d'extrémité en appui partiel contre la paroi d'extrémité de la lame **413** de façon à former un élément moulant pour le moulage d'une incision unique dont les parois principales sont reliées par des ponts de liaison moulés dans les deux orifices **418, 419** délimités par la lame fixe **413** et les lames pivotantes **416, 417.**

Après moulage et sous l'action des ponts de gomme moulés dans les orifices, les lames pivotantes vont tourner autour de leur axe de pivot respectif, comme représenté en traits pointillés sur cette même figure, pour permettre le démoulage sans rupture des ponts de liaison moulés. La pièce de moule décrite permet de mouler une incision débouchant latéralement dans des rainures et dont les parois principales sont reliées par deux ponts de liaison tout en maintenant une continuité du volume de l'incision.

Bien entendu, le moule selon l'invention peut être aisément adapté pour mouler par exemple une incision située en totalité sous la surface de roulement de la bande de roulement à l'état neuf (c'est-à-dire ne débouchant pas sur cette surface); dans ce cas, le ou les bras pivotants sont entièrement situés à une distance supérieure à zéro par rapport à la surface de moulage dudit moule et viennent en appui l'un sur l'autre par exemple.

## Revendications

1. Élément moulant **(1, 101, 201, 301)** destiné à équiper une pièce d'un moule de moulage d'une bande de roulement en caoutchouc pour mouler une découpure ayant ses parois principales reliées par au moins un pont de liaison en mélange de caoutchouc, cet élément moulant comportant une partie d'ancrage **(2, 102, 202, 302)** prolongée par une partie moulante **(3, 103, 203, 303)**, la partie d'ancrage étant destinée à être fixée à une pièce de moule, la partie moulante, destinée à faire saillie sur la face de moulage de ladite pièce, comportant au moins deux extensions **(31, 32; 131, 132; 231, 232; 331, 332)** dont les faces sont destinées au moulage des parois de la découpure, l'une au moins de ces extensions comprenant au moins un bras **(4, 104, 204, 204', 304)** monté pivotant autour d'un axe de pivot **(5, 208, 208')** de façon à être, dans la position de moulage, en appui sur au moins une autre extension du même élément moulant pour délimiter au moins un orifice **(6, 106, 107, 206, 207, 306)** traversant l'élément moulant et destiné au moulage d'un pont de liaison, l'élément moulant étant **caractérisé en ce que** l'axe de pivot de chaque bras monté pivotant traverse ledit bras et l'extension portant ledit bras et est en outre perpendiculaire à la direction de démoulage de l'élément moulant de façon à ce que chaque bras puisse pivoter au cours du démoulage sous l'action des efforts exercés par le caoutchouc.

2. Élément moulant **(1, 101, 201, 301)** selon la revendication 1 **caractérisé en ce que** des moyens sont prévus pour limiter l'angle maximal de rotation de chaque bras pivotant **(4, 104, 204, 204', 304)** au moment du démoulage de façon à faciliter le retour dans la position de moulage lors de la pénétration dudit élément moulant dans une bande en mélange de caoutchouc non encore vulcanisée.

3. Élément moulant **(1, 101, 201, 301)** selon l'une des revendications **1** ou **2 caractérisé en ce que** des moyens de rappel élastiques sont prévus pour faire tourner les bras pivotants **(4, 104, 204, 204', 304)** afin de retrouver la position de moulage après démoulage.

4. Élément moulant **(1, 101, 201, 301)** selon l'une des revendications **1** à **3 caractérisé en ce que** des moyens de retenue sont en outre prévus pour maintenir les bras pivotants **(4, 104, 204, 204',** **304)** en rotation dans la position de moulage, lesdits moyens étant efficaces jusqu'à un niveau d'effort déterminé.

5. Pièce d'un moule **(310)** d'une bande de roulement pour pneumatique comportant au moins un élément moulant (**301**) selon l'une des revendications **1** à **4.**

6. Pièce d'un moule **(410)** d'une bande de roulement pour pneumatique pourvue d'une face de moulage **(410')** et pouvant être déplacée suivant une direction **X** de moulage /démoulage, cette pièce de moule comportant au moins deux éléments de relief **(411, 412, 413)** faisant saillie sur la face de moulage de la pièce de moule, l'un au moins desdits éléments de relief **(411, 412)** portant au moins un bras **(416, 417)** monté pivotant autour d'un axe de pivot **(420, 421)** de façon à être, dans la position de moulage, en appui sur au moins un autre desdits éléments de relief pour délimiter au moins un orifice **(418, 419)** destiné au passage de mélange de caoutchouc pendant le moulage d'une bande de roulement , la pièce de moule étant **caractérisée en ce que** l'axe de pivot **(420, 421)** de chaque bras monté pivotant traverse ledit bras et est fixé à l'élément de relief portant ledit bras et est en outre perpendiculaire à la direction de démoulage X de façon à ce que chaque bras puisse pivoter au cours du démoulage sous l'action des efforts exercés par le caoutchouc.t.

7. Pièce d'un moule **(410)** selon la revendication **6 caractérisée en ce qu'**un élément de relief **(411, 412)** comportant au moins un bras pivotant **(416, 417)** coopère avec un autre élément de relief **(413)** pour mouler une découpure dont les parois principales sont reliées par au moins un pont de liaison en mélange de caoutchouc, au moins un bras pivotant étant entièrement situé à une distance supérieure à zéro de la face de moulage **(410')** de la pièce de moule.

8. Pièce d'un moule **(410)** selon l'une des revendications **6** ou **7 caractérisée en ce que** des moyens de rappel élastiques sont en outre prévus afin d'imposer à chaque bras pivotant **(416, 417)** de retrouver sa position dans la configuration de moulage après chaque nouveau moulage d'une bande de roulement.

9. Pneumatique comportant une bande de roulement moulée avec un moule comportant au moins une pièce de moule selon l'une des revendications **6** à **8.**

10. Pneumatique comportant une bande de roulement moulée avec un moule comportant au moins une pièce de moule selon la revendication 5.

## Patentansprüche

1. Formgebendes Element (1, 101, 201, 301), das dazu bestimmt ist, ein Formteil zum Formen einer Lauffläche aus Kautschuk zu bestücken, um einen Ausschnitt zu formen, dessen Hauptwände über mindestens eine Verbindungsbrücke aus Kautschukmischung miteinander verbunden sind, wobei dieses formgebende Element einen Verankerungsbereich (2, 102, 202, 302) aufweist, der von einem formgebenden Bereich (3, 103, 203, 303) verlängert wird, wobei der Verankerungsbereich dazu bestimmt ist, an einem Formteil befestigt zu werden, wobei der formgebende Bereich, der dazu bestimmt ist, auf der Formgebungsfläche des Teils vorzustehen, mindestens zwei Verlängerungen (31, 32; 131, 132; 231, 232; 331, 332) aufweist, deren Flächen zum Formen der Wände des Ausschnitts bestimmt sind, wobei mindestens eine dieser Verlängerungen mindestens einen Arm (4, 104, 204, 204', 304) aufweist, der um eine Schwenkachse (5, 208, 208') schwenkbar montiert ist, um in der Formgebungsstellung auf mindestens einer anderen Verlängerung des gleichen formgebenden Elements aufzuliegen, um mindestens eine das formgebende Element durchquerende Öffnung (6, 106, 107, 206, 207, 306) zu begrenzen, die dazu bestimmt ist, eine Verbindungsbrücke zu formen, wobei das formgebende Element **dadurch gekennzeichnet ist, dass** die Schwenkachse jedes schwenkbar montierten Arms den Arm und die den Arm tragende Verlängerung durchquert und außerdem senkrecht zur Ausformungsrichtung des formgebenden Elements liegt, damit jeder Arm während des Ausformens unter der Wirkung der vom Kautschuk ausgeübten Kräfte schwenken kann.

2. Formgebendes Element (1, 101, 201, 301) nach Anspruch 1, **dadurch gekennzeichnet, dass** Mittel vorgesehen sind, um den maximalen Drehwinkel jedes Schwenkarms (4, 104, 204, 204', 304) zum Zeitpunkt des Ausformens zu begrenzen, um die Rückkehr in die Formgebungsstellung beim Eindringen des formgebenden Elements in eine Lauffläche aus noch nicht vulkanisierter Kautschukmischung zu erleichtern.

3. Formgebendes Element (1, 101, 201, 301) nach einem der Ansprüche 1 oder 2, **dadurch gekennzeichnet, dass** elastische Rückholmittel vorgesehen sind, um die Schwenkarme (4, 104, 204, 204', 304) zu drehen, damit sie nach dem Ausformen in die Formgebungsstellung zurückkehren.

4. Formgebendes Element (1, 101, 201, 301) nach einem der Ansprüche 1 bis 3, **dadurch gekennzeichnet, dass** außerdem Haltemittel vorgesehen sind, um die Schwenkarme (4, 104, 204, 204', 304) in der Formgebungsstellung in Drehung zu halten, wobei die Mittel bis zu einem bestimmten Kraftniveau wirksam sind.

5. Formteil (310) für eine Luftreifen-Lauffläche, das mindestens ein formgebendes Element (301) nach einem der Ansprüche 1 bis 4 aufweist.

6. Formteil (410) für eine Luftreifen-Lauffläche, das mit einer Formgebungsfläche (410') versehen ist und in einer Richtung X des Formens/Ausformens bewegt werden kann, wobei dieses Formteil mindestens zwei Reliefelemente (411, 412, 413) aufweist, die auf der Formgebungsfläche des Formteils vorstehen, wobei mindestens eines der Reliefelemente (411, 412) mindestens einen Arm (416, 417) trägt, der um eine Schwenkachse (420, 421) schwenkbar montiert ist, um in der Formgebungsstellung auf mindestens einem anderen der Reliefelemente aufzuliegen, um mindestens eine Öffnung (418, 419) zu begrenzen, die für den Durchlass der Kautschukmischung während des Formens einer Lauffläche bestimmt ist, wobei das Formteil **dadurch gekennzeichnet ist, dass** die Schwenkachse (420, 421) jedes schwenkbar montierten Arms den Arm durchquert und am den Arm tragenden Reliefelement befestigt ist, und außerdem senkrecht zur Ausformungsrichtung X liegt, so dass jeder Arm während des Ausformens unter der Wirkung der von dem Kautschuk ausgeübten Kräfte schwenken kann.

7. Formteil (410) nach Anspruch 6, **dadurch gekennzeichnet, dass** ein mindestens einen Schwenkarm (416, 417) aufweisendes Reliefelement (411, 412) mit einem anderen Reliefelement (413) zusammenwirkt, um einen Ausschnitt zu formen, dessen Hauptwände über mindestens eine Verbindungsbrücke aus Kautschukmischung verbunden werden, wobei mindestens ein Schwenkarm vollständig in einer Entfernung größer als Null von der Formgebungsfläche (410') des Formteils entfernt angeordnet ist.

8. Formteil (410) nach einem der Ansprüche 6 oder 7, **dadurch gekennzeichnet, dass** außerdem elastische Rückholmittel vorgesehen sind, um jeden Schwenkarm (416, 417) dazu zu zwingen, nach jedem erneuten Formen einer Lauffläche seine Stellung in der Formgebungskonfiguration wiederzufinden.

9. Luftreifen mit einer Lauffläche, die mit einer Form geformt wird, die mindestens ein Formteil gemäß einem der Ansprüche 6 bis 8 aufweist.

10. Luftreifen mit einer Lauffläche, die mit einer Form geformt wird, die mindestens ein Formteil gemäß Anspruch 5 aufweist.

## Claims

1. A moulding element (1, 101, 201, 301) intended to be fitted on a mould part for moulding a rubber tread for moulding a cutout having its main walls connected by at least one connecting bridge of rubber mix, this moulding element comprising an anchoring part (2, 102, 202, 302) prolonged by a moulding part (3, 103, 203, 303), the anchoring part being intended to be fastened to a mould part, the moulding part, which is intended to project from the moulding face of said part, comprising at least two extensions (31, 32; 131, 132; 231, 232; 331, 332), the faces of which are intended to mould the walls of the cutout, at least one of these extensions comprising at least one arm (4, 104, 204, 204', 304) which is mounted to pivot about a pivot pin (5, 208, 208') so as to bear, in the moulding position, on at least one other extension of the same moulding element to define at least one orifice (6, 106, 107, 206, 207, 306) passing through the moulding element and intended to mould a connecting bridge fastened to said extension, the moulding element being **characterised in that** the pivot pin of each arm mounted to pivot passes through said arm and the extension bearing said arm and is furthermore perpendicular to the direction of demoulding of the moulding element such that each arm can pivot during demoulding under the action of the forces exerted by the rubber.

2. A moulding element (1, 101, 201, 301) according to Claim 1, **characterised in that** means are provided for limiting the maximum angle of rotation of each pivoting arm (4, 104, 204, 204', 304) at the time of demoulding so as to facilitate the return into the moulding position upon penetration of said moulding element into a strip of rubber mix which has not yet been vulcanised.

3. A moulding element (1, 101, 201, 301) according to one of Claims 1 or 2, **characterised in that** elastic return means are provided for turning the pivoting arms (4, 104, 204, 204', 304) in order to regain the moulding position after demoulding.

4. A moulding element (1, 101, 201, 301) according to one of Claims 1 to 3, **characterised in that** retaining means are furthermore provided for keeping the pivoting arms (4, 104, 204, 204', 304) in rotation in the moulding position, said means being effective up to a given level of stress.

5. A part for a mould (310) for a tyre tread comprising at least one moulding element (301) according to one of Claims 1 to 4.

6. A part for a mould (410) for a tyre tread, provided with a moulding face (410') and being able to be displaced in a direction X of moulding/demoulding, this mould part comprising at least two elements in relief (411, 412, 413) projecting from the moulding face of the mould part, at least one of said elements in relief (411, 412) bearing at least one arm (416, 417) mounted to pivot about a pivot pin (420, 421), so as to bear, in the moulding position, on at least one other of said elements in relief to define at least one orifice (418, 419) intended for rubber mix to pass through during the moulding of a tread, the mould part being **characterised in that** the pivot pin (420, 421) of each arm mounted to pivot passes through said arm and is fastened to the element in relief bearing said arm and is furthermore perpendicular to the demoulding direction X such that each arm can pivot during demoulding under the action of the forces exerted by the rubber.

7. A part for a mould (410) according to Claim 6, **characterised in that** an element in relief (411, 412) comprising at least one pivoting arm (416, 417) cooperates with another element in relief (413) to mould a cutout, the main walls of which are connected by at least one connecting bridge of rubber mix, at least one pivoting arm being entirely located at a distance greater than zero from the moulding face (410') of the mould part.

8. A part for a mould (410) according to one of Claims 6 or 7, **characterised in that** elastic return means are furthermore provided to force each pivoting arm (416, 417) to resume its position in the moulding configuration after each new moulding operation for a tread.

9. A tyre comprising a tread moulded with a mould comprising at least one mould part according to one of Claims 6 to 8.

10. A tyre comprising a tread moulded with a mould comprising at least one mould part according to Claim 5.
